# EUROPÄISCHE PATENTSCHRIFT

(11) **EP 1 082 225 B1**
(45) Veröffentlichungstag und Bekanntmachung des Hinweises auf die Patenterteilung: **28.11.2001**
(21) Anmeldenummer: 99927718.9
(22) Anmeldetag: 23.04.1999
(51) Int. Cl.: B41F 1/00, B41F 13/004, B41F 31/15, H02K 41/03

(54) **WALZE FÜR EINE ROTATIONSDRUCKMASCHINE**
ROLLER FOR A ROTARY PRESS
ROULEAU POUR PRESSE ROTATIVE

(30) Priorität: 24.04.1998 DE 19818550
(43) Veröffentlichungstag der Anmeldung: 14.03.2001
(73) Patentinhaber: Koenig & Bauer Aktiengesellschaft, 97080 Würzburg (DE)
(72) Erfinder: STIEL, Jürgen, Alfred, D-97289 Thüngen (DE)
(86) Internationale Anmeldenummer: DE9901231
(87) Internationale Veröffentlichungsnummer: WO9955533

(56) Entgegenhaltungen:
- EP-A- 0 689 279
- EP-A- 0 738 591
- EP-A- 0 788 879
- DE-A- 4 430 693
- DE-A- 19 603 765
- US-A- 4 234 831
- US-A- 5 065 676

## Beschreibung

Die Erfindung betrifft eine Walze einer Rotationsdruckmaschine gemäß dem Oberbegriff des Anspruches 1.

In der DE 44 30 693 A1 ist ein aus einem Elektromotor für einen Rotationsantrieb und einem in axialer Richtung wirkenden Linearmotor bestehender Antrieb für eine Walze oder einen Zylinder einer Rotationsdruckmaschine dargestellt.

Nachteilig dabei ist ein hoher Platzbedarf und ein großer Aufwand an elektrischen Bauteilen.

Weiterhin ist durch die EP 06 89 279 A2 ein Elektromotor mit zwei Freiheitgraden bekannt geworden.

Die EP 07 88 879 A1 beschreibt einen Zylinder einer Druckmaschine mit einem Elektromotor zum Antrieb in Umfangsrichtung. Dabei ist der Stator des Elektromotors ortsfest und der Läufer des Elektromotors wird mittels eines zweiten Elektromotors in axialer Richtung bewegt.

Die US 42 34 831 A offenbart einen Elektromotor, dessen Stator mehrere Elektromagnete und dessen Rotor einen einzigen Magnet aufweist.

Die DE 196 03 765 A1 zeigt eine Reibwalze, mit innenliegendem Kolben und Zylinder zur Erzeugung einer Bewegung in axialer Richtung.

Der Erfindung liegt die Aufgabe zugrunde, eine Walze einer Rotationsdruckmaschine zu schaffen.

Die Aufgabe wird erfindungsgemäß durch die Merkmale des Anspruches 1 gelöst.

Die mit der Erfindung erzielbaren Vorteile bestehen insbesondere darin, daß sowohl Bauraum als auch elektrische oder auch mechanische Bauteile gespart werden können. Mittels eines Motors wird sowohl eine Bewegung in Umfangsrichtung als auch in axialer Richtung erzeugt.

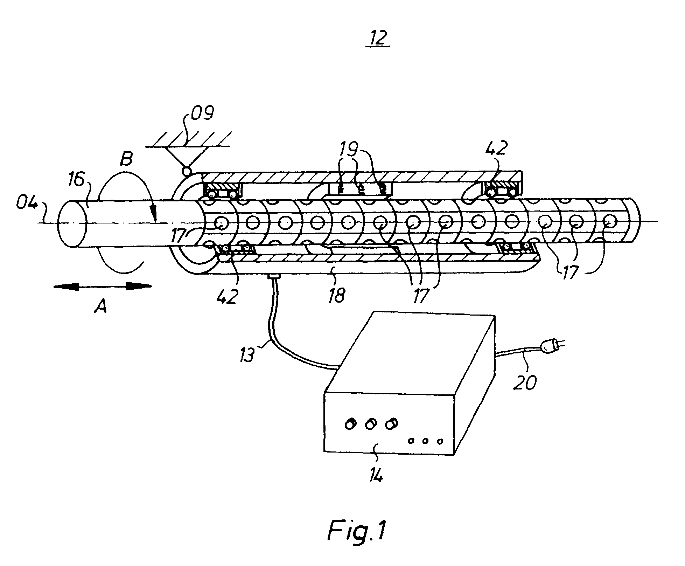

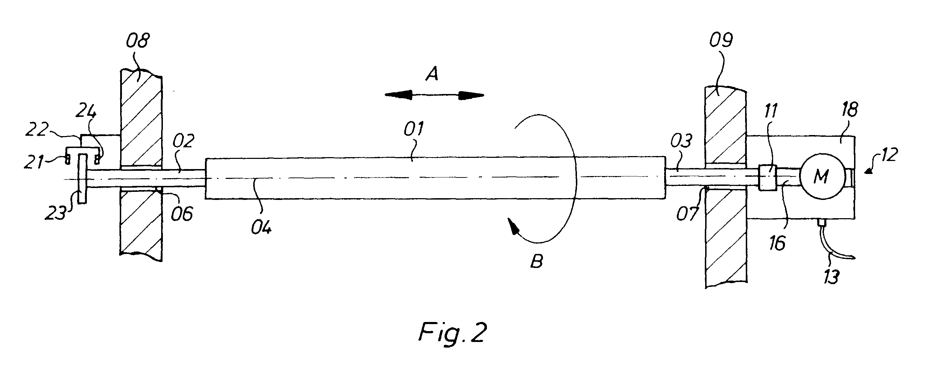

Für den in den Fig. 1 und 2 sowie dem dazugehörigen Text auf den Seiten 2 bis 5 offenbarten Gegenstand wird kein Schutz begehrt.

Zwei Ausführungsbeispiele sind in der Zeichnung dargestellt und werden nachfolgend näher beschrieben. Es zeigen:
- Fig. 1: einen Motor in schematischer perspektivischer Darstellung mit zwei Freiheitsgraden zum Antrieb in Umfangsrichtung sowie in axialer Richtung sowie eine Rechnereinheit;
- Fig. 2: den Motor nach Fig. 1 in drehfester Anordnung an einem Seitengestell und in Wirkverbindung mit einem rotierenden Bauteil;
- Fig. 3: ein Wirkschaltbild der Rechnereinheit des Motors;
- Fig. 4: eine zweite, erfindungsgemäße Antriebsvariante eines rotierenden Bauteiles mit integriertem Motor zum Antrieb in Umfangsrichtung und in axialer Richtung.

Ein antreibbares rotierendes Bauteil für eine Rotationsdruckmaschine, insbesondere ein Zylinder oder eine Walze 01 ist mit seinen Wellenzapfen 02; 03 drehfest verbunden. Die Wellenzapfen 02; 03 sind in einer axialen, d. h. parallel zur Rotationsachse 04 der Walze 01 verlaufenden Richtung A hin- und herverschiebbar und in Umfangsrichtung B drehbar in Lagern 06; 07 eines Seitengestelles 08; 09 gelagert. Ein Wellenzapfen 03 ist z. B. mittels einer Kupplung 11 mit einem außerhalb der Walze 01 angeordneten Motor 12 verbunden, welcher über eine elektrische Leitung 13 (Fig. 1) mit einer Rechnereinheit 14 in Verbindung steht.

Der Motor 12 besteht aus einem inneren, in Umfangsrichtung B rotierbaren sowie in axialer Richtung A hin- und herbewegbaren Läufer 16. Das Läufer 16 weist an seiner Oberfläche sowohl in Umfangsrichtung B als auch in Axialrichtung A voneinander beabstandete Magnete 17 auf. Der innere Läufer 16 wird von einem dem inneren Läufer 16 umhüllenden drehfest angeordnetem äußeren Stator 18 getragen. Auf der Innenfläche des äußeren Stator 18 sind in axialer Richtung A voneinander beabstandete Elektromagnete 19 angeordnet. Es kann eine größere Anzahl von Elektromagneten 19 nebeneinander angeordnet sein als in Fig. 1 dargestellt.

Der Abstand zwischen den Magneten 17 des rotierenden Läufers 16 zu dem Abstand zwischen den Elektromagneten 19 des drehfesten Stator 18 verhält sich beispielsweise wie 2 : 3. Dies ist analog zu einem bürstenlos zweipoligen Dreiphasen-Drehstrommotor.

Die Rechnereinheit 14, welche mittels einer Leitung 13 mit dem äußeren Stator 18 des Motors 12 verbunden ist, ist über eine Zuleitung 20 mit einer nicht dargestellten Energiequelle verbindbar.

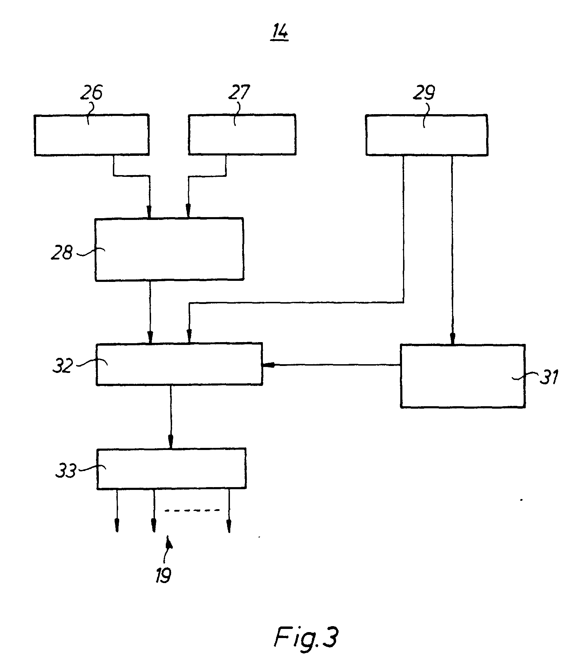

An dem antriebsfreien Wellenzapfen 02 der Walze 01 ist beispielsweise ein Sensor 21 angeordnet, welcher in einer seitengestellfesten Halterung 22 befestigt ist und einen Abstand zu einer auf dem Wellenzapfen 02 angeordneten Scheibe 23 ermittelt. Dadurch kann die gegenwärtige axiale Lage der Walze 01 festgestellt werden. Ein zweiter auf der Halterung 22 angeordneter Sensor 24 stellt mittels der Scheibe 23 den gegenwärtigen Drehwinkel der Walze 01 fest. Beide Sensoren 21; 24 sind mittels nichtdargestellter Leitungen mit einem Hubdetektor 26 bzw. einem Drehwinkeldetektor 27 der Rechnereinheit 14 verbunden (Fig. 3), welche die relative Position des Läufers 16 und des Stators 18 zueinander berechnen und das Ergebnis an ein Rechenteil 28 oder Speicher weitergeben. Mittels einer Eingabeeinrichtung 29 oder auch einem Speicher für sich wiederholende Daten wird ein Wert für die gewünschte Bewegungsrichtung A und B angegeben. Neu eingegebene oder veränderte Daten werden in einem Rechner 31 eingegeben, der die Abstände zwischen den Magneten 17 und den Elektromagneten 19 ermittelt und das Ergebnis an ein Selektionsteil 32 weiterleitet. Dieses Selektionsteil 32 veranlaßt die notwendige Beaufschlagung der angesteuerten Elektromagnete 19 über ein Ausgangsteil 33 (Fig. 3). Damit wird eine kombinierte Bewegung des inneren Läufers 16 sowohl in Axialrichtung A als auch in Umfangsrichtung B möglich. Weiterhin besteht die Möglichkeit, z. B. nur eine Bewegungsrichtung, z. B. in Umfangsrichtung auszuüben.

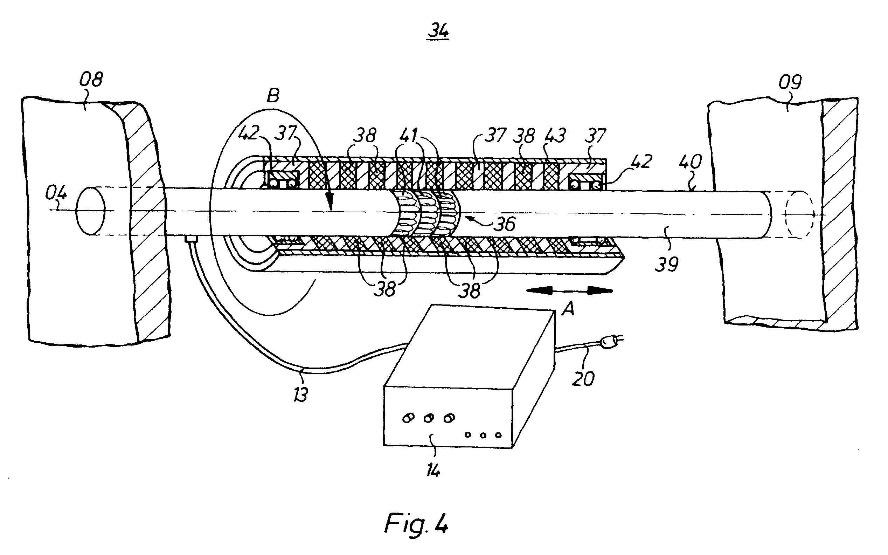

Nach einer zweiten, erfindungsgemäßen Ausführungsvariante weist ein rotierendes Bauteil, eine Walze 34, z. B. eine Reibwalze für eine Rotationsdruckmaschine, einen in die Walze 34 integrierten Motor 36 auf. Dieser Motor 36 besteht aus einem äußeren, in Umfangsrichtung B rotierbaren sowie in axialer Richtung A hin- und herbewegbaren hohlzylinderförmigen Läufer 37. Dieser Läufer 37 trägt an seiner Innenfläche sowohl in Umfangsrichtung B als auch in axialer Richtung A voneinander beabstandete Magnete 38 vorzugsweise Permanentmagnete. Der äußere, hin- und herbewegbare Läufer 37 ist koaxial auf einem in seinem Hohlraum befindlichen, drehfesten zylindrischen inneren Stator 39 angeordnet. Der als Achse ausgebildete Stator 39 weist auf seiner Oberfläche 40 eine Anzahl von in axialer Richtung A beabstandeter steuerbarer Elektromagnete 41 auf. Es können mehr Elektromagnete 41 angeordnet sein; als in Fig. 4 dargestellt sind.

Der Läufer 37 ist als Tragrohr 37 für eine Beschichtung 43 der Walze 34 ausgebildet. Diese Beschichtung 43 kann direkt auf dem Tragrohr 37 beispielsweise aufvulkanisiert angeordnet sind. Auch ist es möglich eine Hülse zwischen Tragrohr 37 und Beschichtung 43 anzuordnen, so daß ein aus Hülse und Beschichtung bestehender "Sleeve" zerstörungsfrei lösbar auf den Tragrohr 37 angeordnet.

Die Magnete 38 sind beispielsweise in radialen Bohrungen des Tragrohres 37 angeordnet.

Die Achse der Walze 39 kann auch mehrteilig ausgebildet sein, wobei zumindest ein Zapfen mit Magneten 38 versehen ist.

Auch ist es möglich, daß das Tragrohr 37 in axialer Richtung gesehen nur teilweise mit Magneten zu versehen. Die Anzahl ist abhängig von der erforderlichen Kraft und von dem zu erzeugenden Hub.
Auch ist es möglich, Tragrohr und Läufer getrennt auszubilden und das Tragrohr mit dem Läufer zu verbinden.

Zwischen Läufer 37 und Stator 39 sind Lager 42, z. B. Kugellager angeordnet (Fig. 4), desgleichen zwischen dem Läufer 16 und dem Stator 18 (Fig. 1).

Der innere seitengestellfeste Stator 39 ist über eine Leitung 13 mit der Rechnereinheit 14 verbunden. Ebenfalls sind auf dem inneren Stator 39 oder einem der Seitengestelle 08; 09 nicht dargestellte Sensoren, analog den in Fig. 2 dargestellten Sensoren 21; 24 zum Ermitteln der Lage des äußeren bewegbaren Läufers 37 angeordnet.

Die Walze 01; 34 weist eine Beschichtung 43 auf, welche aus Kunststoff oder Gummi besteht. Die Beschichtung 43 kann auch aus einem Chromüberzug bestehen.

Nach einer anderen Variante kann die Beschichtung 43 auch so ausgebildet sein, daß die Oberfläche der Walze 34 als Formzylinder dient.

Die Walze 01; 34 kann zur Abfuhr von Wärme gekühlt sein. Dazu kann beispielsweise der Stator 16; 39 von einem Kühlmittel durchflossen werden.

Der Motor 12; 36 erzeugt also die axiale Bewegung aufgrund magnetischer Kräfte direkt, ohne daß eine rotative Bewegung in eine lineare Bewegung umgesetzt wird.

### Bezugszeichenliste

- 01: Walze
- 02: Wellenzapfen (01)
- 03: Wellenzapfen (01)
- 04: Rotationsachse (01; 34; 12)
- 05: -
- 06: Lager
- 07: Lager
- 08: Seitengestell
- 09: Seitengestell
- 10: -
- 11: Kupplung
- 12: Motor
- 13: Leitung
- 14: Rechnereinheit
- 15: -
- 16: Läufer (12)
- 17: Magnet (16)
- 18: Stator (12)
- 19: Elektromagnet (18)
- 20: Zuleitung
- 21: Sensor
- 22: Halterung (21)
- 23: Scheibe
- 24: Sensor
- 25: -
- 26: Hubdetektor (14)
- 27: Drehwinkeldetektor (14)
- 28: Rechenteil (14)
- 29: Eingabeeinrichtung (14)
- 30: -
- 31: Rechner (14)
- 32: Selektionsteil (14)
- 33: Ausgangsteil (14)
- 34: Walze
- 35: -
- 36: Motor
- 37: Läufer, Tragrohr (34)
- 38: Magnet
- 39: Stator (34)
- 40: Oberfläche
- 41: Elektromagnet (34)
- 42: Lager
- 43: Beschichtung

- A: Axialrichtung (01)
- B: Umfangsrichtung (01)

## Patentansprüche

1. Walze (34) einer Rotationsdruckmaschine, wobei die Walze (34) sowohl in Umfangsrichtung als auch in axialer Richtung eine Bewegung ausführend angeordnet ist, **dadurch gekennzeichnet, daß** zum Antrieb ein einziger Motor (12; 36) vorgesehen ist und daß dieser Motor (12; 36) einen sowohl in Umfangsrichtung (B) rotierenden als auch in axialer Richtung (A) hin- und herbewegbaren Läufer (37) aufweist, daß dieser Motor (12; 36) die axiale Bewegung des Läufers (37) aufgrund seiner magnetischen Kräfte direkt erzeugend angeordnet ist, daß der Motor (36) innerhalb eines rotierenden Tragrohres (37) der Walze (34) angeordnet ist und daß das eine Beschichtung (43) aufnehmende Tragrohr (37) an seiner Innenseite zumindest teilweise mit einer Mehrzahl von Magneten (38) versehen ist und eine Achse (39) oder Zapfen der Walze (34) mit Elektromagneten (41) versehen ist.

2. Walze (34) nach Anspruch 1, **dadurch gekennzeichnet, daß** die Beschichtung (43) direkt auf dem Tragrohr (37) aufgebracht ist.

3. Walze (34) nach Anspruch 1, **dadurch gekennzeichnet, daß** die Beschichtung (43) mittels einer Hülse auf dem Tragrohr (37) befestigt ist.

4. Walze (34) nach Anspruch 1, **dadurch gekennzeichnet, daß** eine Beschichtung (43) der Walze (34) aus Kunststoff oder Chrom besteht.

5. Walze (34) nach Anspruch 1, **dadurch gekennzeichnet, daß** eine Beschichtung (43) der Walze (34) aus Gummi besteht.

## Claims

1. Roll (34) for a rotary printing machine, the roll (34) being arranged to execute a movement both in the circumferential direction and in the axial direction, **characterized in that** in order to drive it, a single motor (12; 36) is provided, and in 5 that this motor (12; 36) has a rotor (37) that both rotates in the circumferential direction (B) and moves to and fro in the axial direction (A), **in that** this motor is arranged to generate the axial movement of the rotor (37) directly on the basis of ist magnetic forces, **in that** the motor (36) is arranged within a rotating supporting tube (37) belonging to the roll (34), and **in that** the supporting tube (37), which carries a 10 coating (43), is provided on its inner side, at least partly, with a multiplicity of magnets (38), and a shaft (39) or journal of the roll (34) is provided with electromagnets (41).

2. Roll (34) according to Claim 1, **characterized in that** the coating (43) is applied directly to the supporting tube (37).

3. Roll (34) according to Claim 1, **characterized in that** the coating (43) is fixed to the supporting tube (37) by means of a sleeve.

4. Roll (34) according to Claim 1, **characterized in that** a coating (43) on the roll (34) consists of plastic or chromium.

5. Roll (34) according to Claim 1, **characterized in that** a coating (43) on the roll (34) consists of rubber.

## Revendications

1. Rouleau (34) pour une machine à imprimer rotative, le rouleau (34) étant disposé en effectuant un déplacement tant en direction périphérique qu'également en direction axiale, **caractérisée en ce que**, pour assurer l'entraînement, est prévu un moteur (12; 36) unique, et **en ce que** ce moteur (12; 36) présente un rotor (37), tant tournant en direction périphérique (B), qu'également déplaçable dans un sens et dans l'autre en direction axiale (A), **en ce que** ce rotor (12; 36) est disposé en générant directement le déplacement axial du rotor (37), du fait de ses efforts magnétiques, **en ce que** le moteur (36) est disposé à l'intérieur d'un tube support (36) rotatif du rouleau (34), et **en ce que** le tube support (37), recevant un revêtement (43), est muni, sur sa face intérieure, au moins partiellement d'une pluralité d'aimants (38) et un axe (39) ou un tourillon du rouleau (34) est muni d'électroaimants (41).

2. Rouleau (34) selon la revendication 1, **caractérisé en ce que** le revêtement (43) est appliqué directement sur le tube support (37).

3. Rouleau (34) selon la revendication 1, **caractérisé en ce que** le revêtement (43) est fixé sur le tube support (35) au moyen d'une douille.

4. Rouleau (34) selon la revendication 1, **caractérisé en ce qu'**un revêtement (43) du rouleau (34) est constitué de matière synthétique ou de chrome.

5. Rouleau (34) selon la revendication 1, **caractérisé en ce qu'**un revêtement (43) du rouleau (34) est constitué de caoutchouc.
